# EUROPÄISCHE PATENTSCHRIFT

(11) **EP 0 566 822 B1**
(45) Veröffentlichungstag und Bekanntmachung des Hinweises auf die Patenterteilung: **04.06.1997**
(21) Anmeldenummer: 93100644.9
(22) Anmeldetag: 18.01.1993
(51) Int. Cl.: C08L 63/00, C08G 59/18, C08L 63/02, C08G 59/50

(54) **Flexible Härter**
Flexible curing agent
Durcisseur flexible

(30) Priorität: 25.03.1992 DE 4209554
(43) Veröffentlichungstag der Anmeldung: 27.10.1993
(73) Patentinhaber: Bakelite AG, 58642 Iserlohn-Letmathe (DE)
(72) Erfinder: Mathes, Alfred, Dr., W-4134 Rheinberg 1 (DE); Grundke, Ulrich, W-4100 Duisburg 12 (DE); Meier, Bert, Dr., W-5750 Menden (DE); Zehrfeld, Jürgen, Dr., W-4223 Voerde (DE)

(56) Entgegenhaltungen:
- DE-A- 2 000 041
- GB-A- 1 008 847
- DATABASE WPI Derwent Publications Ltd., London, GB; AN 90-323327 & JP-A-2 111 950 (HITACHI CHEMICAL KK) 24. April 1990
- DATABASE WPI Derwent Publications Ltd., London, GB; AN 92-111463(14) & JP-A-4 057 821 (TORAY THIOKOL) 25. Februar 1992
- DATABASE WPI Derwent Publications Ltd., London, GB; AN 81-57647D(32) & JP-A-56 074 156 (DAINIPPON TORYO KK) 19. Juni 1981

## Beschreibung

Die Erfindung betrifft neue Härter, die sich insbesondere zur Flexibilisierung von Epoxidharzen eignen. Sie finden bevorzugt Verwendung zur Herstellung flexibilisierter Stoffe mit gleichzeitig hoher Chemikalienbeständigkeit und Schlagzähigkeit.

Epoxidharz-Bindemittel zeichnen sich u. a. durch ihre hohen mechanischen Festigkeiten aus. Bedingt durch die aromatische Struktur der Grundbausteine und die hohe Vernetzungsdichte liegt die Bruchdehnung der Bindemittel in der Regel unter 5 %.

Insbesondere für Abdichtungen und Beschichtungen besteht jedoch ein gesteigerter Bedarf an Epoxidharz-Bindemitteln mit einer höheren Flexibilität und Elastizität und einer guten Chemikalienbeständigkeit.

Es sind mehrere Versuche bekannt, die hohen mechanischen und chemischen Beständigkeiten von Epoxidharzen durch Abmischung mit reaktiven flexibilisierenden Stoffen so zu modifizieren, um flexibilisierte und beständige Bindemittel in einem zu erhalten. Die Bindemittel weisen allerdings in der Verarbeitung, bei der Aushärtung oder bei der Chemikalienbeständigkeit Nachteile auf, die den Einsatz in der Praxis einschränken.

So besteht die Möglichkeit, eine gute Flexibilisierung von Epoxidharzen durch gemeinsame Härtung von flüssigen, merkaptoendständigen Polysulfid-Oligomeren oder -Polymeren mit Epoxidharzen zu erreichen, die bei einer Beschichtung eine ausreichende Rißüberbrückung erlauben. Leider sind derartige Beschichtungen gegen aromatische Kohlenwasserstoffe, Ester, Ketone der chlorierte Kohlenwasserstoffe nicht ausreichend beständig.

Die gleichen Einschränkungen der Beständigkeit treffen auch auf direkt epoxidierte Polysulfidpolymere zu. Nachteilig wirken sich hier die geringe Reaktivität und die teilweise Unverträglichkeit mit polaren chemikalienbeständigen Kalthärtern für Epoxidharze aus. Dadurch tritt eine verstärkte Phasenseparation der reaktiven Polysulfidpolymere auf, die wegen der Mikrosegregation nicht mit ins Netzwerk eingebaut werden. Folglich sinkt die Reißdehnung und Zugfestigkeit; die Weiterreißfestigkeit sinkt und die Quellbarkeit mit aromatischen Kohlenwasserstoffen/chlorierten Kohlenwasserstoffen, Estern und Ketonen steigt.

Die zweite Möglichkeit zur Flexibilisierung von Epoxidharzen besteht in der Härtung mit hochmolekularen, aminischen Verbindungen, etwa mit Polyaminoamiden oder mit modifizierten aminischen Verbindungen, wie sie z. B. aus DE-A-39 19 128 oder DE-A-39 19 547 bekannt sind. Auch derartige Härter ergeben, sofern sie überhaupt eine ausreichend niedrige Verarbeitungsviskosität besitzen, keine ausreichende Chemikalienbeständigkeit.

Daher weisen z. B. die heute zugelassenen Beschichtungen mit reaktiven Kunststoffen für Auffangwannen nach dem Wasserhaushaltsgesetzt § 19 einen mehrschichtigen Aufbau auf. Eine flexible Schicht sichert diese Überbrückung ab, eine zweite Schicht ist beständig gegen die gelagerten Chemikalien. Die flexible Unterschicht besitzt üblicherweise eine nicht ausreichende Chemikalienbeständigkeit, während die obere Deckschicht nicht ausreichend rißüberbrückende Eigenschaften aufweist. Dadurch wird der mehrschichtige Aufbau unumgänglich.

Daraus resultieren mehrere Nachteile:

Die Beschichtung ist aufwendig in der Verlegung. Die Materialkosten der Beschichtung sind hoch. Die Beschichtung erfüllt ihre abdichtende Funktion nur bei intakter chemikalienbeständiger Deckschicht. Der Belagsaufbau ist mechanisch gering belastbar wegen der flexiblen Unterschicht.

DE-A-2000041 beschreibt flexible Härter für Epoxidharze, die aus der Reaktion von Polyepoxiden mit einem Überschuß an Polydisulfiden der Formel HS-(C₂H₄-OCH₂O-C₂H₄-SS)ₙ-C₂H₄-OCH₂O-C₂H₄₋SH und kleinen Mengen an Aminen erhalten werden.

Es ist daher Aufgabe der Erfindung, intern wirkende Flexibilisierungsmittel für Epoxidharze bereitzustellen, die ein stark verbessertes Eigenschaftsprofil besitzen, die insbesondere eine hohe Chemikalienbeständigkeit und eine hohe Dehnung aufweisen.

Die Lösung der Aufgabe erfolgt durch Bereitstellung von Amin-Addukten von Estern epoxidierter Polysulfidpolymere gemäß Anspruch 1, durch ein Verfahren zu ihrer Herstellung gemäß Anspruch 2 und ihre Verwendung als flexible Härter für Epoxidverbindungen, sowie zur Herstellung von Beschichtungen, Klebe- und Dichtungsmassen, Vergußmassen und Laminaten gemäß der Ansprüche 3 bis 7.

Es wurde gefunden, daß Ester entsprechend der allgemeinen Formeln (I) und/oder (II) 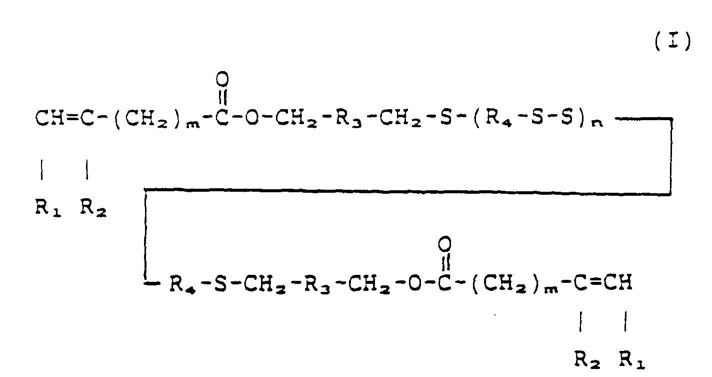 oder 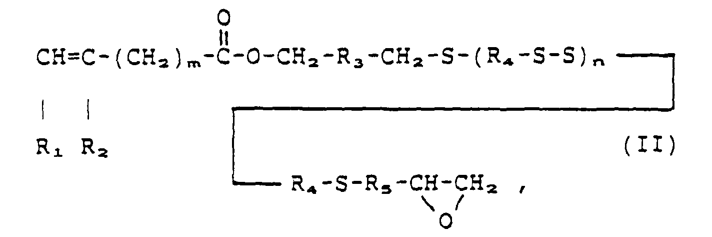 in denen
- m =: 0 oder 1
- n =: 3 bis 25
- R₁: ein Furyl- oder Phenylrest oder Wasserstoff,
- R₂: Wasserstoff oder eine Methylgruppe,
- R₃: eine Gruppe gemäß der Formeln, 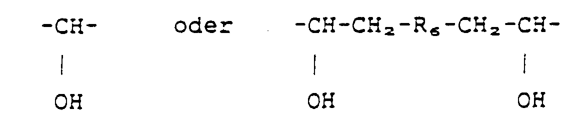
- R₄: eine Gruppe gemäß der Formel

-C₂H₄-O-CH₂-O-C₂H₄-
- R₅: eine Gruppe gemäß der Formeln

-CH₂-

oder 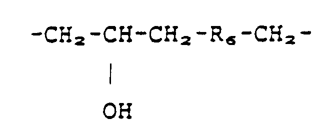
- R₆: eine Gruppe gemäß der Formeln

-O-(CH₂)₂₋₁₂-O-,

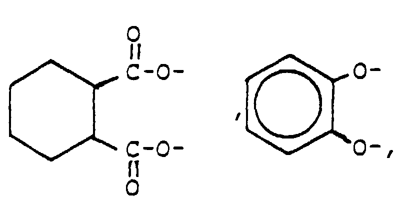

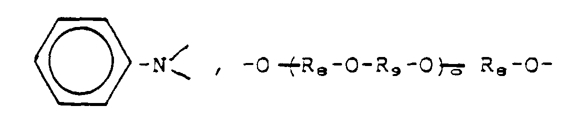

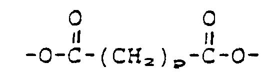

oder 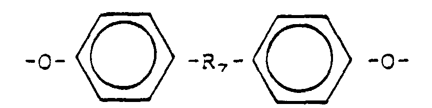 R₇ - CH₂-, 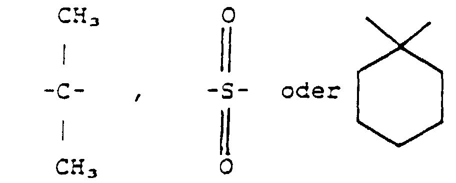
- o =: 1 bis 20
- p =: 1 bis 11
und R₈ und R₉ gleich oder verschieden sind
und eine Ethylen- oder Propylen-Gruppe
bedeuten,
mit primären und sekundären Aminen unter Addukt-Bildung reagieren.

Diese Ester-Amin-Addukte können als Härter für Epoxidverbindungen verwendet werden, wobei eine brauchbare Härtungsgeschwindigkeit bereits bei Raumtemperatur gegeben ist.

Die mit diesen Ester-Amin-Addukten gehärteten Epoxidverbindungen sind flexible Materialien, die eine Dehnbarkeit bis zu 150 % erlauben und die danach eine nahezu vollständige Rückstellung zeigen.

Außerdem aber weisen diese gehärteten Produkte eine ausgezeichnete Chemikalienbeständigkeit aus.

Aufgrund der Flexibilität und Chemikalienbeständigkeit der gehärteten Epoxidverbindungen eignen sich die Härter besonders zur Herstellung von Beschichtungen sowie von Klebe- und Dichtungsmassen auf Basis von Epoxidverbindungen.

Da die erfindungsgemäßen Härter sowohl eine Kalt- als auch eine Warmhärtung ermöglichen, ist eine Eignung zur Herstellung von Vergußmassen und von hochwertigen Laminaten auf der Basis von Epoxidverbindungen gegeben.

Die erfindungsgemäßen Ester-Amin-Addukte werden in einfacher Weise hergestellt, indem aminische Verbindungen, die mindestens zwei aminische Wasserstoffatome enthalten, unter Luftzutritt mit ungesättigten Estern epoxierter Polysulfide vermischt und mehrere Stunden (2 bis 10 h) bei Temperaturen im Bereich von 20 bis 90 °C gehalten werden.

Zur Adduktbildung wird pro ethylenisch ungesättigter Bindung des Esters ein aminisches Wasserstoffatom benötigt. Alle weiteren aminischen Wasserstoffatome des Addukts, die sich durch gezielte Auswahl der Aminkomponente einstellen lassen, dienen bei der erfindungsgemäßen Verwendung zur Härtung der beigemischten Epoxidverbindungen.

Als Aminkomponente einsetzbar sind somit alle aliphatischen, alicyclischen und aromatischen Amine, oder Polyamine, einzeln oder in beliebigem Gemisch miteinander, die mindestens eine primäre oder mindestens zwei sekundäre Aminogruppen besitzen. Insbesondere sind davon alle Amine und Polyamine geeignet, die als Härter für Epoxidverbindungen bekannt sind. Die Aminmenge wird dabei so gewählt, daß pro ethylenisch ungesättigter Gruppe des Esters ein Aminmolekül eingesetzt wird.

Die erfindungsgemäß zur Adduktbildung eingesetzten Ester, die Gegenstand einer parallelen Anmeldung sind, sind Umsetzungsprodukte epoxidierter Polysulfide mit ethylenisch ungesättigten Säuren. Ausgangsbausteine sind handelsübliche, flüssige Polysulfid-Oligomere oder -Polymere der allgemeinen Formel

HS-(C₂H₄-O-CH₂-O-C₂H₄-S-S)ₙ-C₂H₄-O-CH₂-O-C₂H₄-SH ,

wobei n im Bereich von 3 bis 25 liegt. Die eingesetzten Produkte sind hinsichtlich ihrer Molekulargröße nicht einheitlich, vielmehr ist die Größe n als statistisches Mittel zu sehen. Die handelsüblichen Produkte sind zu 0,1 bis 2 % trifunktionell. Diese Trifunktionalität bleibt auch bei den weiteren Umsetzungen erhalten, wirkt sich aber im Endprodukt nicht merkbar aus. Sie wird in der angegebenen allgemeinen Formel nicht berücksichtigt.

Polysulfid-Oligomere oder -Polymere werden in an sich bekannter Weise durch Zusammenrühren der flüssigen oder in Lösung vorliegenden Reaktanden und mehrstündiges Erwärmen auf Temperaturen im Bereich von 40 bis 80 °C mit epoxidgruppenhaltigen, difunktionellen Verbindungen umgesetzt. Entsprechende Verbindungen sind entweder Epihalogenhydrine, bevorzugt Epichlorhydrin oder difunktionelle Epoxidverbindungen. Als solche können im Prinzip alle difunktionellen Epoxidverbindungen eingesetzt werden. Bevorzugte Epoxidverbindungen sind aliphatische oder aromatische Glycidylether oder Ester, wie z. B. Resorcindiglycidylether, Diglycidylanilin, Diglycidylether der Bisphenole, insbesondere von Bisphenol A oder F, aliphatischer Diole mit einer Kettenlänge von 2 bis 12 C-Atomen, Polyalkylenglykoldiglycidylether oder von aliphatischen Dicarbonsäuren mit 3 bis 13 C-Atomen.

Bei der Umsetzung der Polysulfid-Oligomere oder -Polymere mit Epihalogenhydrin wird die den Merkaptogruppen äquivalente Menge an Epihalogenhydrin eingesetzt. Entsprechende Produkte sind unter dem Warenzeichen ELP® (Morton) im Handel erhältlich. Bei der Umsetzung der Polysulfid-Oligomere oder -Polymere mit difunktionellen Epoxidverbindungen werden die Mengenverhältnisse so gewählt, daß pro Merkaptogruppe mindestens zwei Epoxidgruppen eingesetzt werden.

In der betrieblichen Praxis wird häufig ein Überschuß an Epoxidverbindungen gewählt, da dies in relativ kurzer Reaktionszeit eine vollständige Umsetzung der Merkaptogruppen gewährleistet. Dabei kann der Überschuß der Epoxidgruppen bis zu dem 10-fachen des den Merkaptogruppen entsprechenden stöchiometrischen Verhältnisses betragen. Nach der Umsetzung liegt dann ein Gemisch aus Epoxidverbindungen und epoxidierten Polysulfid-Oligomeren und -Polymeren vor, das ohne weitere Aufarbeitung der weiteren Reaktion, der Veresterung mit einer ethylenisch ungesättigten Carbonsäure zugeführt wird. Dabei wird dann die allen Epoxidgruppen äquivalente Menge an ungesättigter Carbonsäure eingesetzt, so daß als Reaktionsprodukt ein Gemisch aus an sich bekannten Estern von Epoxidverbindungen und den erfindungsgemäßen Estern erhalten wird. Auch derartige Gemische bilden mit Aminen Addukte, die als flexible Härter eingesetzt werden können.

Die im ersten Reaktionsschritt erhaltenen epoxidierten Polysulfide werden ohne weitere Aufarbeitung mit einer ethylenisch ungesättigten Carbonsäure umgesetzt. Auch diese Umsetzung erfolgt in an sich bekannter Weise durch Zusammenrühren der flüssigen oder in Lösung vorliegenden Reaktanden und Erwärmen das Reaktionsgemisch auf eine Temperatur im Bereich von 60 bis 90 °C für mehrere Stunden. Im allgemeinen wird die Reaktion beendet, wenn eine Säurezahl von weniger als 5 erreicht ist. Die epoxidierten Polysulfide werden je nach gewünschtem Produkt mit einer dem Epoxidäquivalent entsprechenden Menge oder der entsprechenden halben Menge an ethylenisch ungesättigter Säure umgesetzt. Beispiele für entsprechende ethylenisch ungesättigte Säuren sind die Acryl-, Methacryl-, Furylacryl-, Croton- und Zimtsäure.

Die ethylenisch ungesättigten Ester epoxidierter Polysulfide reagieren mit aminischem Wasserstoff unter Adduktbildung bereits bei Raumtemperatur. Da diese Reaktion schneller verläuft als die Reaktion aminischer Wasserstoffatome mit Epoxidverbindungen, lassen sich die erfindungsgemäßen flexiblen Härter auch in einem Gemisch aus Estern epoxidierter Polysulfide, Epoxidverbindungen und Aminen in situ herstellen und in einer Folgereaktion sofort mit Epoxidverbindungen unter Härtung des Gemisches weiterreagieren.
Als Epoxidverbindungen eignen sich alle epoxidgruppenhaltigen Harze, die meist mindestens zwei Epoxidgruppen pro Molekül enthalten, sowie monomere Epoxidverbindungen wie sie als sog. Reaktivverdünner üblicherweise verwendet werden.

Eine spezielle Epoxidverbindung, bei deren erfindungsgemäßer Härtung durch Vermischung mit den erfindungsgemäßen flexiblen Härtern ein besonders flexibilisiertes Produkt mit einer Dehnbarkeit bis zu 200 % erhalten wird, sind partielle Ester epoxidierter Polysulfide gemäß der allgemeinen Formel (II) 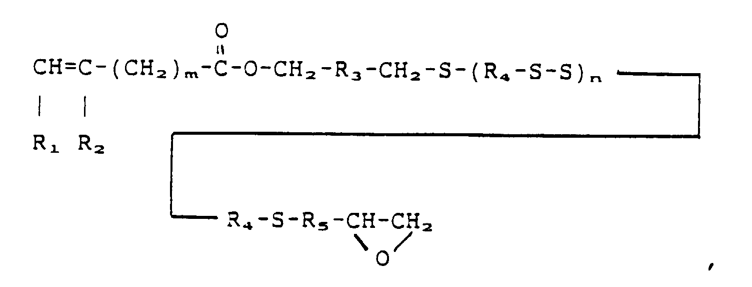 in denen
- m =: 0 oder 1
- n =: 3 bis 25
- R₁: ein Furyl- cder Phenylrest oder Wasserstoff,
- R₂: Wasserstoff oder eine Methylgruppe,
- R₃: eine Gruppe gemäß der Formeln, 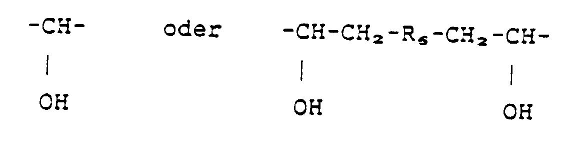
- R₄: eine Gruppe gemäß der Formel

-C₂H₄-O-CH₂-O-C₂H₄-
- R₅: eine Gruppe gemäß der Formeln

-CH₂-

oder 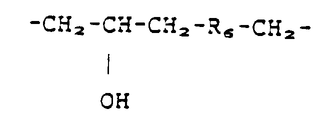
- R₆: eine Gruppe gemäß der Formeln

-O-(CH₂)₂₋₁₂-O- ,

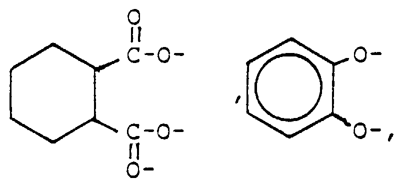

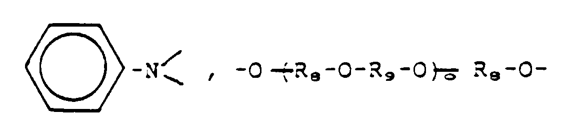

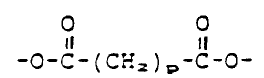

oder 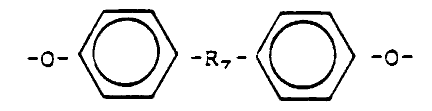 R₇ - CH₂- , 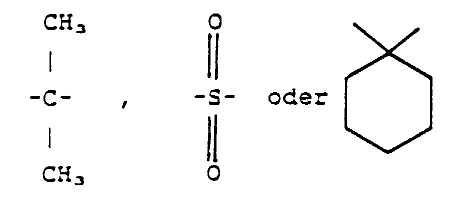
- o =: 1 bis 20
- p =: 1 bis 11
und R₈ und R₉ gleich oder verschieden sind und eine Ethylen- oder Propylen-Gruppe bedeuten.

Das Mengenverhältnis von epoxidischen Verbindungen und flexiblen Härter wird so eingestellt, daß möglichst äquivalente Mengen aminischem Wasserstoff zu Epoxidgruppen und ggf. ungesättigten Estergruppen vorhanden sind.

### BEISPIELE

Beispiele 1 bis 5 beschreiben die Herstellung epoxidierter Polysulfide. Diese werden gemäß Beispielen 6 bis 12 zu den Erstern I oder II umgesetzt. Die Beispiele 13 bis 27 beschreiben die erfindungsgemäßen Härter und Epoxidzusammensetzungen, die diese Härter enthalten.

### Beispiel 1

Zu 1393 g eines Epoxidharzes auf Basis Bisphenol A mit einem Epoxidäquivalent von 188 g und einer Viskosität von 10 000 mPa·s bei 25 °C und 2 g Benzyldimethylamin werden unter Rühren und Schutzgasatmosphäre 1000 g eines merkaptoendständigen Polysulfidpolymers mit einem mittleren Molekulargewicht von 1000 und einer Bis-äthylformaldisulfidkette (Thiokol® LP-3) bei 60 bis 80 °C innerhalb von 2 Stunden zugetropft. Die Nachreaktion beträgt weitere 3 Stunden bei 80 °C. Das Produkt ist eine klare Flüssigkeit mit einer Epoxidzahl von 10,6 und einer Viskosität von ca. 83 000 mPa·s bei 25 °C. Die Ausbeute beträgt 100 %.

### Beispiel 2

Analog zu Beispiel 1 werden 676 g Rütapox® 0161 mit 0,5 g BDMA und 1000 g Thiokol® LP-3 in 560 g Xylol umgesetzt. Das Produkt (100 % Ausbeute) weist einen Epoxidgehalt von 4,0 % und eine Viskosität (25 °C) von 1 100 mPa·s auf.

### Beispiel 3

Analog zu Beispiel 1 werden 478 g Rütapox® Verdünner R mit 0,5 g BDMA und 1000 g Thiokol® LP-3 umgesetzt. Das Produkt (100 % Ausbeute) weist einen Epoxidgehalt von 6,5 % und eine Viskosität (25 °C) von 55 000 mPa·s auf.

### Beispiel 4

Analog zu Beispiel 1 werden 688 g Rütapox® 0161 mit 0,5 g BDMA und 1000 g Thiokol® LP-3 in 1688 g Propylenglycolmonoethylether (PM) umgesetzt. Das Produkt (100 % Ausbeute) weist einen Epoxidgehalt von 2,8 % und eine Viskosität (25 °C) von 1 700 mPa·s auf.

### Beispiel 5

Analog zu Beispiel 1 werden 478 g Rütapox® Verdünner R mit 0,5 g BDMA und 1000 g Thiokol® LP-3 in 1478 g Propylenglycolmonoethylether (PM) umgesetzt. Das Produkt (100 % Ausbeute) weist einen Epoxidgehalt von 2,8 % und eine Viskosität (25 °C) von 75 mPa·s auf.

### Beispiel 6

In einem 2 l-Dreihalskolben, ausgerüstet mit Thermometer, Flügelrührer, Rückflußkühler und Tropftrichter, werden 406 g epoxidiertes Polysulfid-Oligomer (entsprechend Beispiel 1) vorgelegt und auf 80 °C erhitzt. In Gegenwart von 1,5 g Benzyldimethylamin werden bei 80 °C 73,44 g Acrylsäure in 1 bis 2 Stunden zugetropft. Nach 18 bis 20 Stunden Nachreaktion bei 80 °C wird mit 200 g Benzylalkohol verdünnt und dann gekühlt. Das erhaltene Esterharz hat einen Festgehalt von 70 %, eine Viskosität von 700 mPa·s (Höppler-Viskosimeter, bei 25 °C) und eine Säurezahl von 3,6 mg KOH/g.

### Beispiel 7

In einem temperierbaren 2 l-Dreihalskolben, ausgerüstet mit Thermometer, Flügelrührer, Rückflußkühler und Tropftricher, werden 1075 g epoxidiertes Polysulfid aus Beispiel 2, 1,5 g Benzyldimethylamin und 12,5 g Xylol auf 80 °C erwärmt und innerhalb von 2 Stunden 36,7 Acrylsäure zugetropft. Die Nachreaktion erfolgt bei 80 °C über die Dauer von 18 Stunden (Säurezahl 3,7 mg KOH/g). Der Vinylester (klare Flüssigkeit, 100 % Ausbeute) weist eine Viskosität (25 °C) von 2 000 mPa·s und einen Restepoxidgehalt von 2,05 % auf.

### Beispiel 8

Analog zu Beispiel 7 werden 1075 g epoxidiertes Polysulfid aus Beispiel 2, 1,5 g Benzyldimethylamin und 87,7 g Methacrylsäure und 29 g Xylol umgesetzt. Die Nachreaktion erfolgt bei 80 °C über die Dauer von 20 Stunden. Der Vinylester weist eine Viskosität (25 °C) von 3500 mPa·s und eine Säurezahl von 4,5 mg KOH/g auf.

### Beispiel 9

Analog zu Beispiel 7 werden 1075 g epoxidiertes Polysulfid aus Beispiel 2, 1 g Benzyldimethylamin und 43,9 g Methacrylsäure und 15 g Xylol umgesetzt. Die Nachreaktion erfolgt bei 80 °C über die Dauer von 18 Stunden. Der Vinylester weist eine Viskosität (25 °C) von 2 100 mPa·s bei einen Restepoxidgehalt von 1,97 % auf.

### Beispiel 10

Analog zu Beispiel 7 werden 662,5 g epoxidiertes Polysulfid aus Beispiel 3, 1,5 g Benzyldimethylamoniumchlorid, 73,44 g Acrylsäure und 246,4 g Xylol umgesetzt. Die Nachreaktion erfolgt bei 80 °C über die Dauer von 18 Stunden. Der Vinylester weist eine Viskosität (25 °C) von 3 500 mPa·s bei einer Säurezahl von 4,3 mg KOH/g auf.

### Beispiel 11

Analog zu Beispiel 7 werden 662,5 g epoxidiertes Polysulfid aus Beispiel 3, 1 g Benzyldimethylamin, 36,7 g Acrylsäure und 233,7 g Xylol umgesetzt. Die Nachreaktion erfolgt bei 80 °C über die Dauer von 18 Stunden. Der Vinylester weist eine Viskosität (25 °C) von 1 100 mPa· bei einen Restepoxidgehalt von 1,86 % auf.

### Beispiel 12

Analog zu Beispiel 6 werden 556 g eines handelsüblichen Glycidylethers eines merkaptoendständigen Polysulfidpolymers (ELP® -3) mit einer Epoxidzahl von 3,35 und einer Viskosität bei 25 °C von 4 000 mPa·s mit 73,4 g Acrylsäure umgesetzt. Der erhaltene Ester hat bei 25 °C eine Viskosität von 2 800 mPa·s.

### Beispiel 13

In 480 g 2,4,4-Trimethylhexamethylen-diamin werden bei 60 bis 80 °C unter Rühren und Luftzufuhr 822 g flexibilisierter Ester aus Beispiel 6 innerhalb von 2,5 Stunden zugetropft. Die Nachreaktion beträgt 0,5 Stunden bei 80 °C. Der Härter weist eine Viskosität von 3 700 mPa·s bei 25 °C auf. Die Ausbeute beträgt 100 %.

### Beispiel 14

Analog zu Beispiel 13 werden 256 g N-Amino-Ethyl-Piperazin mit 631 g des Esters aus Beispiel 12 umgesetzt. Der erhaltene Härter hat bei 25 °C eine Viskosität von 5 200 mPa·s.

### Beispiel 15

Analog zu Bespiel 13 werden 186 g 2-Butyl-2-ethylpentan-1,5-diamin mit 631 g des Esters aus Beispiel 12 umgesetzt. Der erhaltene Härter hat bei 25 °C eine Viskosität von 3 400 mPa·s.

### Beispiel 16

Analog zu Beispiel 13 werden 182 g Triethylenglykoldiamin mit 631 g des Esters aus Beispiel 12 umgesetzt. Der erhaltene Härter hat bei 25 °C eine Viskosität von 3 100 mPa·s.

### Beispiel 17

Analog zu Beispiel 13 werden 316 g TMD mit 3400 g epoxidiertem Polysulfid aus Beispiel 4 umgesetzt. Der aminische Härter weist eine Viskosität (25 °C) von 6 200 mPa·s und ein Aminäquivalent von 637 g/Äquiv. auf.

### Beispiel 18

Analog zu Beispiel 13 werden 206,4 g DETA mit 3072 g epoxidiertem Polysulfid aus Beispiel 5 umgesetzt. Der aminische Härter weist eine Viskosität (25 °C) von 820 mPa·s und ein Aminäquivalent von 420 g/Äquiv. auf.

### Beispiel 19

Analog zu Beispiel 13 werden 129,2 g N-Ethylaminopiperazin mit 1075 g Teilester aus Beispiel 7 mit 717,2 g Propylenglykolmonomethylether umgesetzt. Der aminische Härter weist eine Viskosität (25 °C) von 2 830 mPa·s und ein Aminäquivalent von 959 g/Äquiv. auf.

### Beispiel 20

Analog zu Beispiel 13 werden 136 g m-Xylilendiamin mit 1 066,8 g Acrylsäureester aus Beispiel 8 mit 711,2 g Propylenglykolmonomethylether umgesetzt. Der aminische Härter weist eine Viskosität (25 °C) von 510 mPa·s und ein Aminäquivalent von 638 g/Äquiv. auf.

### Beispiel 21

Analog zu Beispiel 13 werden 102 g 1,3-Diaminopentan mit 1 102,2 g Methacrylsäureteilester aus Beispiel 9 mit 734,8 g Propylenglykolmonomethylether umgesetzt. Der aminische Härter weist eine Viskosität (25 °C) von 730 mPa·s und ein Aminäquivalent von 646 g/Äquiv. auf.

### Beispiel 22

Analog zu Beispiel 13 werden 158 g TMD mit 909 g Acrylsäureester aus Beispiel 10 mit 606 g Propylenglykolmonomethylether umgesetzt. Der aminische Härter weist eine Viskosität (25 °C) von 1 000 mPa·s und ein Aminäquivalent von 567 g/Äquiv. auf.

### Beispiel 23

Analog zu Beispiel 13 werden 158 g TMD mit 1 021,8 g Acrylsäureteilester aus Beispiel 11 mit 681,2 g Propylenglykolmonomethylether umgesetzt. Der aminische Härter weist eine Viskosität (25 °C) von 1 125 mPa·s und ein Aminäquivalent von 631 g/Äquiv. auf.

### Beispiel 24 bis 27

Jeweils 100 g Epoxidverbindungen werden mit Härter homogen gemischt. Nach einer Aushärtung von 7 Tagen bei 23 °C wird die Zugfestigkeit bei maximaler Dehnung gemessen. Diese Messungen wurden an 4 mm starken Platten bestimmt (DIN 53 455). Parallel dazu werden an diesen Platten Chemikalientests nach DIN 53 168 durchgeführt. Dabei werden hohe Beständigkeiten gegen Lösungen von Natriumhydroxid und Schwefelsäure sowie Dieseltreibstoff erzielt. Die Ergebnisse sind in der folgenden Tabelle zusammengestellt:

| Nr. Harz | | Härter gem. Bsp. | | | Zugfestigkeit | Dehnung | NaOH 20 % | | H₂SO₄ 20% | | Diesel | |
|---|---|---|---|---|---|---|---|---|---|---|---|---|
| | | | | | [mPa] | [%] | 7d | 14d | 7d | 14d | 7d | 14d |
| 24 | Harz aus Bsp. 1 | 100 g | 4 | 20 g | 4,1 | 87,4 | 1 | 1 | 1 | 1 | 1 | 1 |
| | | | | | | | | | | | | |
| 25 | 0166 | 80 g | 5 | 70 g | 30,0 | 22,7 | 1 | 1 | 1 | 1 | 1 | 1 |
| | Verd. s | 20 g | | | | | | | | | | |
| | | | | | | | | | | | | |
| 26 | ELP® -3 | 35 g | 6 | 50 g | 26,5 | 27,4 | 1 | 1 | 1 | 1 | 1 | 1 |
| | 0161 | 65 g | | | | | | | | | | |
| | | | | | | | | | | | | |
| 27 | 0166 | 80 g | 7 | 60 g | 15,9 | 35,9 | 1 | 1 | 1 | 1 | 1 | 1 |

Erläuterungen:
1 = unbeschränkt

Die Bezeichnungen beinhalten
- 0166 =: (Rütapox® 0166) Epoxidharz auf Basis Bisphenol A / Bisphenol F; Viskosität (25 °C); 8 000 mPa.s.
- 0161 =: (Rütapox® 0161) Epoxidharz auf Basis Bisphenol F; Viskosität (25 °C); 4 500 mPa·s.
- Verd. S =: (Rütapox® Verdünner S) Hexandiglycidylether
- ELP® -3 =: epoxidiertes Polysulfid-Polymer (verg. Bsp. 2)
- Rütapox® Verdünner R =: Resorcindiglycidylether (Epoxidäquivalent 121)
- BDMA =: Benzyldimethylamin
- TMD =: 2,4,4-Trimethylhexamethylen-diamin
- DETA =: Diethylentriamin

## Patentansprüche

1. Addukte aus primären und/oder sekundären Aminen und Estern entsprechend der allgemeinen Formeln (I) und/oder (II) 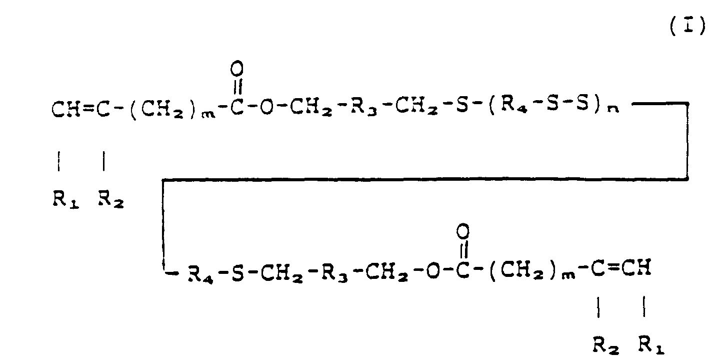 oder 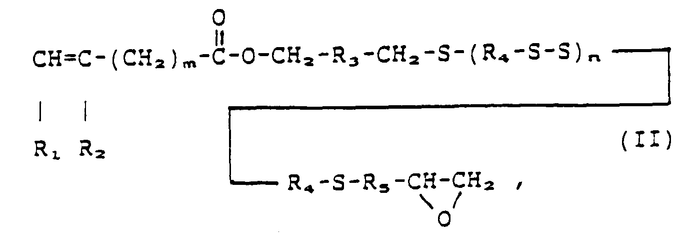 in denen
m = 0 oder 1
n = 3 bis 25
R₁ ein Furyl- oder Phenylrest oder Wasserstoff,
R₂ Wasserstoff oder eine Methylgruppe,
R₃ eine Gruppe gemäß der Formeln, 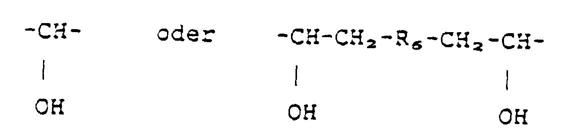
R₄ eine Gruppe gemäß der Formel
-C₂H₄-O-CH₂-O-C₂H₄-
R₅ eine Gruppe gemäß der Formeln
-CH₂-
oder 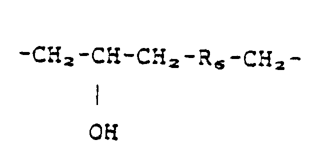
R₆ eine Gruppe gemäß der Formeln
-O-(CH₂)₂₋₁₂-O- , 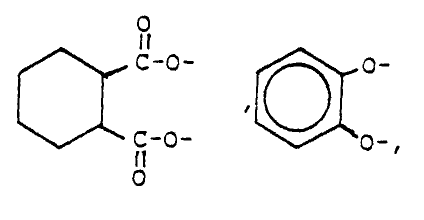 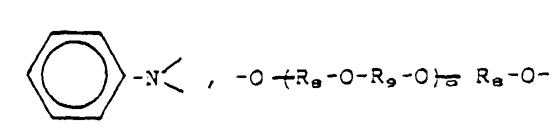 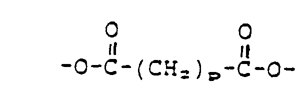
oder 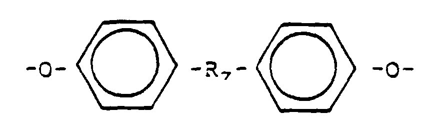 R₇ - CH₂- , 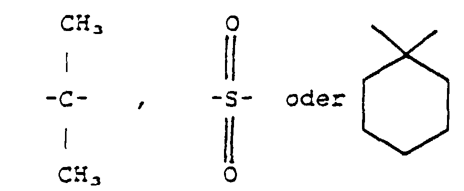
o = 1 bis 20
p = 1 bis 11
und R₈ und R₉ gleich oder verschieden sind
und eine Ethylen- oder Propylen-Gruppe
bedeuten, mit der Maßgabe, daß die Addukte aminische Wasserstoffatome enthalten.

2. Verfahren zur Herstellung der Addukte gemäß Anspruch 1 **dadurch gekennzeichnet**, daß Ester der Formeln I und/oder II mit einer oder mehreren aminischen Verbindungen, die mindestens zwei aminische Wasserstoffatome enthalten, vermischt und unter Luftzutritt mehrere Stunden bei Temperaturen im Bereich von 20 bis 90 °C gehalten werden, wobei die Aminmenge so gewählt wird, daß pro ethylenisch ungesättigter Gruppe der Ester I und/oder II mindestens ein Aminwasserstoff eingesetzt wird.

3. Verwendung der Addukte gemäß Anspruch 1 als flexible Härter für Epoxidverbindungen.

4. Verwendung gemäß Anspruch 3 zur Herstellung von Beschichtungen auf Basis von Epoxidverbindungen.

5. Verwendung gemäß Anspruch 3 zur Herstellung von Klebe- und Dichtungsmassen auf Basis von Epoxidverbindungen.

6. Verwendung gemäß Anspruch 3 zur Herstellung von Vergußmassen auf Basis von Epoxidverbindungen.

7. Verwendung gemäß Anspruch 3 zur Herstellung von Laminaten auf Basis von Epoxidverbindungen.

## Claims

1. Adducts of primary and/or secondary amines and esters corresponding to the general formula (I) and/or (II) 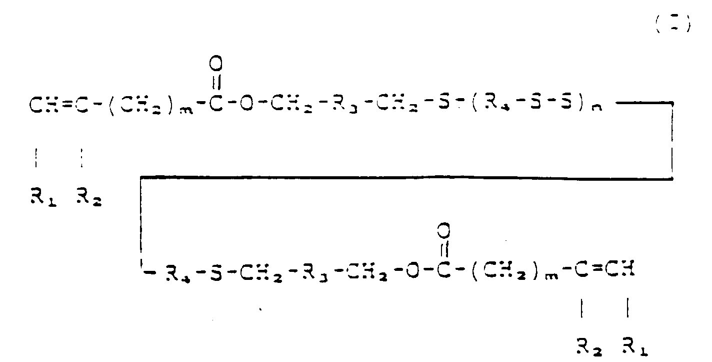 or 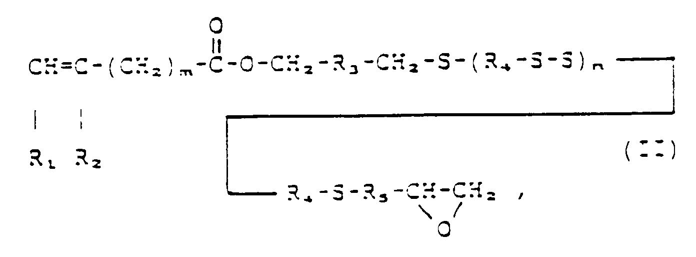 in which
m = 0 or 1
n = 3 to 25
R₁ represents a furyl or phenyl residue or hydrogen,
R₂ represents hydrogen or a methyl group,
R₃ represents a group according to the formula 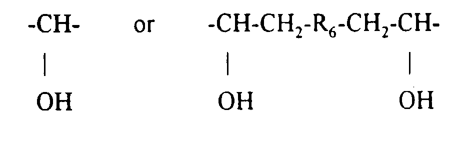
R₄ represents a group according to the formula
C₂H₄-O-CH₂-O-C₂H₄-
R₅ represents a group according to the formula
-CH₂-
or 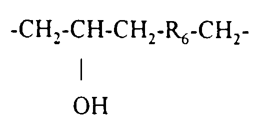
R₆ represents a group according to the formula
-O-(CH₂)₂₋₁₂-O-, 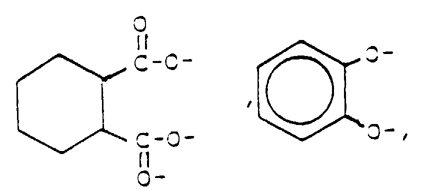 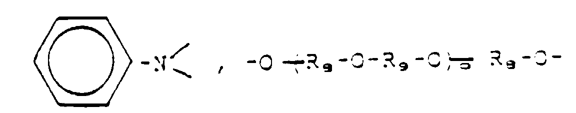 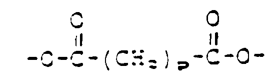
or 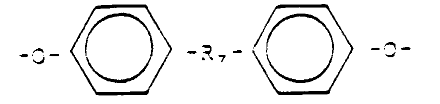
R₇ - CH₂- , 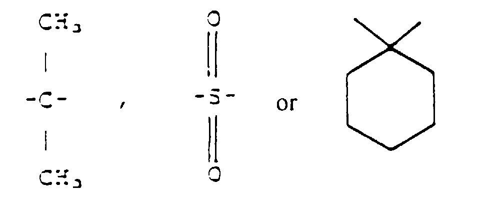
o = 1 to 20
p = 1 to 10
and R₈ and R₉ are the same or different and represent an ethylene or propylene group.

2. A process for producing the adducts according to Claim 1, **characterized in that** esters of formula I and/or II are mixed with one or more amine compounds containing at least two amine hydrogen atoms and are held for several hours at temperatures in the range of from 20 to 90°C, the quantity of the amines being selected to be such that one amine hydrogen is introduced *per* unsaturated ethylene group.

3. Use of the adducts according to Claim 1 as flexible hardeners for epoxy compounds.

4. Use of the adducts according to Claim 1 for producing coatings based on epoxy compounds.

5. Use of the adducts according to Claim 1 for producing adhesive and sealing materials based on epoxy compounds.

6. Use of the adducts according to Claim 1 for producing grouting materials based on epoxy compounds.

7. Use of the adducts according to Claim 1 for producing laminates based on epoxy compounds.

## Revendications

1. Produits d'addition obtenus à partir d'amines primaires et/ou secondaires et d'esters selon les formules générales (I) et/ou (II) 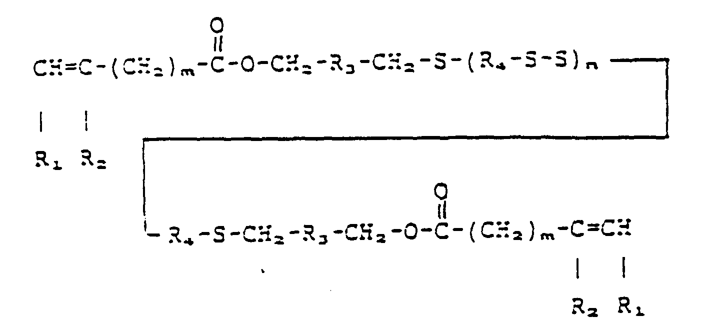 ou 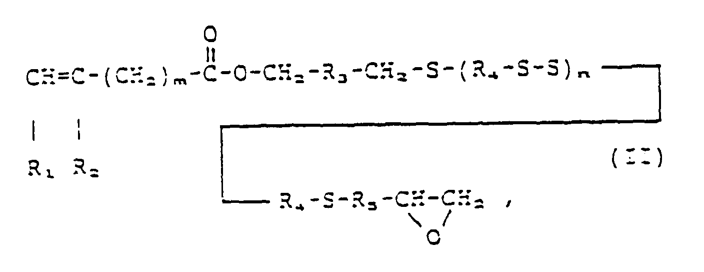 dans lesquelles
m = 0 ou 1
n = 3 à 25
R₁ représente un reste furyle ou phényle ou l'hydrogène,
R₂ représente l'hydrogène ou un groupe méthyle,
R₃ représente un groupe selon les formules 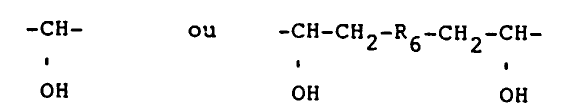
R₄ un groupe selon la formule
-C₂H₄-O-CH₂-O-C₂H₄-
R₅ un groupe selon les formules
-CH₂-
ou 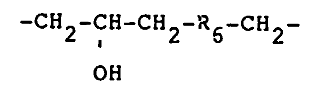
R₆ un groupe selon les formules
-O-(CH₂)₂₋₁₂-O- , 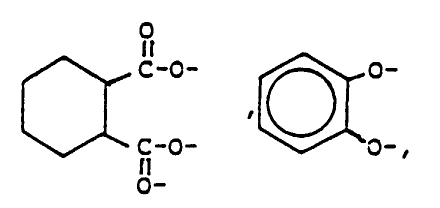 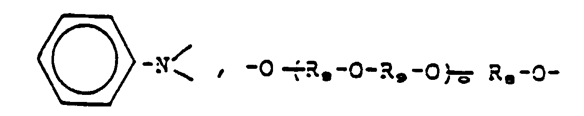 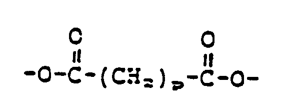
ou 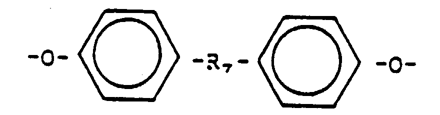
R₇ - CH₂- , 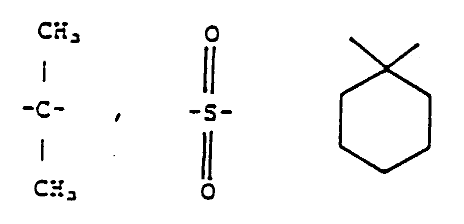
0 = 1 à 20
p = 1 à 10
et R₈ et R₉ sont identiques ou différents et signifient un groupe éthylène ou propylène.

2. Procédé de préparation de produits d'addition selon la revendication 1, caractérisé en ce que des esters de formules I et/ou II sont mélangés avec un ou plusieurs composés aminés renfermant au moins deux atomes d'hydrogène d'amine et sont maintenus pendant plusieurs heures à des températures dans le domaine de 20 à 90°C, la quantité d'amine étant choisie de manière que soit mis en oeuvre un hydrogène d'amine par groupe éthyléniquement insaturé.

3. Utilisation des produits d'addition selon la revendication 1 en tant que durcisseurs souples pour composés époxydes.

4. Utilisation des produits d'addition selon la revendication 1 pour la fabrication de revêtements à base de composés époxydes.

5. Utilisation des produits d'addition selon la revendication 1 pour la fabrication d'adhésifs et de produits d'étanchéité à base de composés époxydes.

6. Utilisation des produits d'addition selon la revendication 1 pour la fabrication de masses coulables à base de composés époxydes.

7. Utilisation des produits d'addition selon la revendication 1 pour la fabrication de stratifiés à base de composés époxydes.
